# EUROPEAN PATENT APPLICATION

(11) **EP 0 637 493 A1**
(43) Date of publication of application: **08.02.1995**
(21) Application number: 94111161.9
(22) Date of filing: 18.07.1994
(51) Int. Cl.: B29C 45/00, B29C 45/18, C08J 3/205, C08K 5/00, C08K 5/3437, A43B 5/04, B29K 105/28, B29K 105/32, B29L 31/50

(54) **Method for obtaining injection-molded parts with selected opacity or transparency**

(30) Priority: 02.08.1993 IT TV930073
(71) Applicant: NORDICA S.p.A., I-31044 Montebelluna (Treviso) (IT)
(72) Inventor: Sandri, Armando, I-31044 Montebelluna (Treviso) (IT); Tonel, Valerio, I-31030 Biadene (Treviso) (IT)
(74) Representative: Alagem Modiano, Lara S.

(57) **Abstract**

Method for obtaining injection-molded elements having a selected opacity or transparency. The method includes a first step for mixing a thermoplastic material, such as a polyurethane, a ionomeric resin or a EVA copolymer with colors that are preferably soluble in organic solvents, followed by a second step for the thermoplastic injection of the mixture into a mold. The method allows to obtain an injection-molded element having regions with different thickness that have different degrees of opacity or transparency. In particular, the thinner portions are transparent. The method thus provides products such as for example a flap (1) for a shoe in which it is possible to visualize underlying parts besides creating shading effects.

## Description

The present invention relates to a method for obtaining injection-molded parts based on thermoplastic materials such as polyurethanes, ionomeric resins or EVA copolymers having a selected opacity or transparency.

Currently, it is known to manufacture many products by using methods that entail the injection-molding of plastics, which is given a certain coloring to aesthetically improve the product or to allow to visually appreciate a certain function or application thereof.

Thus, for example, it is known to manufacture sports shoes, and particularly ski boots, with a molding method for both the shell and any quarters or flaps associated therewith.

The various components obtained by injection-molding a thermoplastic material usually have a preset coloring, and accessories such as levers, cables, bands, pressers and other items, used to improve the skier's comfort or performance, are added to said components at a later time.

These accessories are usually fully or partially concealed in most cases and thus do not allow the user to assess their technical content.

Furthermore, the uniform coloring of the various components of, for example, a shoe, severely limits the color differentiation thereof, making the various productions very similar to one another.

As a partial solution to these drawbacks it is known to manufacture components for ski boots in which a seat is formed after or during a first molding operation. A transparent or semitransparent element, that allows to partially view the items that will be arranged below it, must subsequently be placed at said seat.

However, this solution is expensive, because it is necessary to perform additional methods and because the applied element can be dislodged from its seat during sports practice.

The optional fixing of these applied elements by means of adhesives has not proved to be risolutive.

As a partial solution to this drawback, it may be thought of molding the applied element on the semifinished item, in which an appropriate seat has been formed beforehand.

However, even this solution is expensive, because it requires two different molds and therefore subsequent assembly, increasing the overall costs of the product.

A principal aim of the present invention is therefore to eliminate the described technical problems, solving the drawbacks of the prior art and thus providing a method for obtaining injection-molded elements based on thermoplastic materials, such as polyurethanes, ionomeric resins, or EVA copolymers having a desired opacity or transparency.

Within the scope of the above aim, an important object is to provide a method that allows to place the desired opacity or transparency in selected points or regions.

Another important object is to provide a method that requires a very small number of steps, allowing to obtain the desired element without requiring additional steps after the thermoplastic injection step.

Another object is to provide a method that allows to obtain regions in which opacity or transparency follow one another without discontinuities.

Another object is to provide a method that associates with the preceding characteristics that of obtaining a product that has a selected opacity or transparency in the desired regions while it maintains optimum structural characteristics for example for the transmission of efforts applied by the user when wearing a ski boot.

Another object is to provide a method that is also reliable and safe in use and allows to obtain a product having low manufacturing costs.

This aim, these objects and others which will become apparent hereinafter are achieved by a method for obtaining injection-molded elements based on thermoplastic materials, such as polyurethanes, ionomeric resins, or EVA copolymers having a selected opacity or transparency, characterized in that it comprises: mixing said thermoplastic material with colors that are soluble in organic solvents or with previously dispersed organic pigments or with fluorescent pigments to obtain a mixture; injecting said mixture into at least one mold to obtain said injection-molded elements which have regions with different thickness, the thinner regions being transparent.

Further characteristics and advantages of the invention will become apparent from the following detailed description of a particular but not exclusive embodiment thereof, illustrated only by way of non-limitative example in the accompanying drawings, wherein:

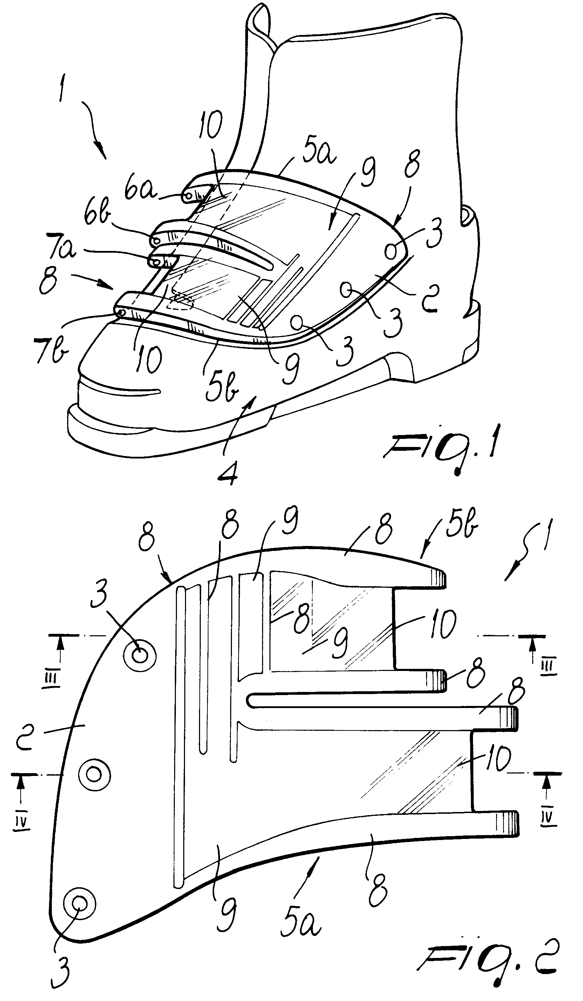

figure 1 is a lateral perspective view of a shell of a ski boot having an element molded according to the invention;

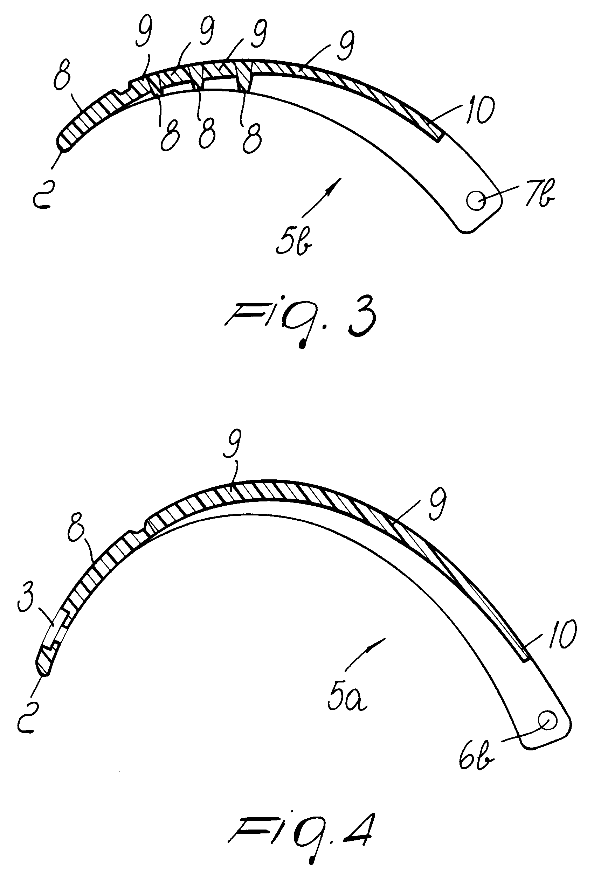

figure 2 is a top plan view of the flattened injection-molded element of figure 1;
figure 3 is a sectional view, taken along the plane III-III of figure 2;
figure 4 is a sectional view, taken along the plane IV-IV of figure 2.

With reference to the above figures, the reference numeral 1 generally designates an injection-molded element based on thermoplastic materials which, in the described embodiment, comprises a flap that has a base 2 at which adapted holes 3 are formed for connection to a shell 4 of a ski boot.

Two bands 5a and 5b protrude from the base 2 and surround the shell 4 at the foot instep region. The bands 5a and 5b have adapted seats 6a, 6b and 7a, 7b at their ends for the possible connection to grip or engagement means.

The method for obtaining this and other injection-molded elements based on thermoplastic materials, such as polyurethanes, ionomeric resins or EVA copolymers, comprises a first step during which said thermoplastic material is mixed with colors, for example of the type that is soluble in organic solvents, and therefore such as liquid colors obtained by dispersing anthraquinone colors in a plasticizing vehicle. The thermoplastic material may also be mixed with colors comprising usual organic pigments (phthalocyanine dye) even though the organic pigments provide a less brilliant chromatic effect.

An example of these colors soluble in organic solvents, or with organic pigments, is the type marketed under the trademark "LIQUI-KOLOR" by the BASF company in Germany.

As an alternative, it is possible to use colors constituted by fluorescent pigments in powder form, of the type known as "PERYLEN", "NAPHTALIMID" and commercially available under the trademark "LUMOGEN" by the BASF company in France.

This first step of mixing the thermoplastic material with the colors entails percentages by weight variable between 0.01% and 1%.

The thermoplastic material, or the other resins, can be mixed with the color by using equipment normally used for injection-molding, such as for example screw mixers, drum rotators or with peristaltic or volumetric pumps for direct dosage on the injection-molding presses.

In order to improve dispersion of the color in the resin, especially when using a low dosage percentage, said color can be diluted in a supporting vehicle.

For this purpose it is possible to use, for example, plasticizing liquids or so-called "UV absorber" liquids such as a sterically hindered amine marketed by CIBA under the trademark "TINUVIN 765".

The second step of the method entails the thermoplastic injection of said mixture into at least one mold. The mold may be finished by polishing, sanding or photoengraving.

In any case, the mold must have regions with different thickness so as to obtain, in the required points of the injection-molded element, first opaque regions 8, second semitransparent regions 9 or third transparent regions 10.

Transparency of the third regions 10 is obtained by varying in a rather sharp and delimited manner the thickness of the injection-molded element.

By using decreasing or tapered cross-sections it is possible to obtain very unusual effects, ranging from an almost or fully opaque tint of the first regions 8 of parts that have a considerable thickness to second semitransparent regions 9 and to third transparent regions 10, as the thickness of the injection-molded element decreases.

The first, second and third regions are defined by acting on the cooling time of the piece, by varying the crystallization of the mass as a function of the thickness and shape, and by varying molding parameters such as the cooling time, mold temperature and material temperature.

It has thus been observed that the method has achieved the intended aim and objects, providing injection-molded elements which are based on thermoplastic materials, such as polyurethanes, ionomeric resins or EVA copolymers, and having regions with selected opacity, semitransparency and transparency according to the specific requirements.

In the illustrated embodiment, an injection-molded element is obtained that can allow, after securing or engagement or grip devices have been associated therewith, to view part of said devices, thus increasing the technical assessment thereof on the part of the user.

Furthermore, the possibility of varying the sequence of the first, second and third regions as desired, provides an injection-molded element having highly significant aesthetic characteristics as regards both purely the image of the product and the differentiation that can be given to certain parts of the element according to particular technical aspects thereof.

The method is susceptible to numerous modifications and variations, all of which are within the scope of the same inventive concept.

The method can of course also be combined into a single step or entail pre-mixing with respect to the first previously mentioned step.

The materials employed, such as the colors soluble in organic solvents or the previously dispersed organic pigments, or still the fluorescent pigments in powder form, may naturally be the most pertinent according to the specific requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Method for obtaining injection-molded elements based on thermoplastic materials, such as polyurethanes, ionomeric resins, or EVA copolymers having a selected opacity or transparency, characterized in that it comprises:
- mixing said thermoplastic material with colors that are soluble in organic solvents or with previously dispersed organic pigments or with fluorescent pigments to obtain a mixture;
- injecting said mixture into at least one mold to obtain said injection-molded elements which have regions with different thickness, the thinner regions being transparent.

2. Method according to claim 1, characterized in that it comprises: mixing said thermoplastic material with colors of the type that is soluble in organic solvents and therefore such as liquid colors obtained by dispersing anthraquinone colors in a plasticizing vehicle, said colors being commercially known by the trademark "LIQUI-KOLOR".

3. Method according to claim 1, characterized in that said colors are constituted by fluorescent pigments in powder form such as Perylen or Naphtalimid, commercially known by the trademark "LUMOGEN".

4. Method according to claim 1, characterized in that said colors are constituted by normal organic pigments, commercially known by the trademark "LIQUI-KOLOR", previously dispersed in liquids.

5. Method according to one or more of the preceding claims, characterized in that mixing said thermoplastic material with said colors entails percentages by weight that can vary between 0.01% and 1%.

6. Method according to claim 1, characterized in that mixing said thermoplastic materials with said colors is performed with equipment normally used for injection-molding, such as screw mixers, drum rotators, or with peristaltic or volumetric pumps for direct dosage on injection presses.

7. Method according to one or more of the preceding claims, characterized in that, in order to improve the dispersion of said colors in said thermoplastic material, especially if a small dosage percentage is used, said colors are diluted in a supporting vehicle prior to, or during, said mixing.

8. Method according to claim 7, characterized in that said supporting vehicle is constituted by plasticizing liquids or by "UV absorber" liquids such as a sterically hindered amine commercially known by the trademark "TINUVIN 765".

9. Method according to one or more of the preceding claims, characterized in that injecting said mixture entails the thermoplastic injection of said mixture into at least one mold, said mold being finished by polishing, sanding or photoengraving, said at least one mold having one or more regions with different thickness.

10. Method according to claim 1, characterized in that said injection-molded element has regions with different thickness in order to obtain first opaque regions, second semitransparent regions or third transparent regions in the desired points or areas.

11. Method according to claim 10, characterized in that the transparency of said third regions is obtained by varying the thickness of said injection-molded element in a rather sharp and delimited manner.

12. Method according to claim 11, characterized in that by using decreasing or tapered cross-sections for said injection-molded element one obtains effects ranging from an almost opaque or fully opaque tint for said first regions, which have a significant thickness, to said second semitransparent regions and to said third transparent regions as the thickness of said injection-molded element decreases.

13. Method according to one or more of the preceding claims, characterized in that, in order to form said first, second and third regions, the cooling time of said injection-molded element is changed, by varying the crystallization of the mass according to the thickness and shape and by varying molding parameters such as cooling time, mold temperature and material temperature.
